# EUROPÄISCHE PATENTSCHRIFT

(11) **EP 1 584 930 B1**
(45) Veröffentlichungstag und Bekanntmachung des Hinweises auf die Patenterteilung: **26.08.2009**
(21) Anmeldenummer: 05005332.1
(22) Anmeldetag: 11.03.2005
(51) Int. Cl.: G01R 27/14, A01M 1/02

(54) **Betriebs- und Auswerte-Schaltung eines Insekten-Sensors**
Operational and analysis circuit of an insect sensor
Circuit de fonction et d'analyse d'un détecteur d'insectes

(30) Priorität: 08.04.2004 DE 102004018422
(43) Veröffentlichungstag der Anmeldung: 12.10.2005
(73) Patentinhaber: Atmel Automotive GmbH, 74072 Heilbronn (DE)
(72) Erfinder: Berhorst, Martin, Dipl.-Ing., 74081 Heilbronn (DE); Schneider, Peter, Dipl.-Phys., 74855 Hassmersheim (DE)
(74) Vertreter: Müller, Wolf-Christian

(56) Entgegenhaltungen:
- US-A- 4 398 145
- US-A- 6 150 944
- US-A- 6 166 641
- US-A1- 2003 001 745

## Beschreibung

Die Erfindung betrifft eine Betriebs- und Auswerte-Schaltung gemäß dem Oberbegriff des Patentanspruchs 1.

Eine solche Betriebs- und Auswerteschaltung ist aus der Patentanmeldung US 2003/0001745 A1 bekannt.

In einigen Teilen der Erde besteht erhöhte Gefahr der Beschädigung von Gebäuden durch Holzfraß von unterirdisch lebenden Termiten. Insbesondere sind davon Holzkonstruktionen in USA, Australien und Neuseeland, aber auch in Südeuropa betroffen. Um festzustellen, ob ein bestimmtes Gebiet von derartigen Arten bedroht ist, werden RFID-Tags (RFID = radio frequency identification) mit externen Widenstandspapierstreifen in dem Boden vergraben. Durch eine Imprägnierung mit einem Lockstoff angelockt, befallen ggf. vorhandene Termiten den Widerstandspapierstreifen und zehren ihn allmählich auf, so dass sich sein elektrischer Widerstand erhöht. Wenn ein Auslesegerät hinreichend nah an den Sensor gebracht wird, versorgt es den Sensor nach einem Transponder-Prinzip mit Energie für eine Widerstandsmessung. Über einem Schwellenwert liegende Widerstandswerte werden dem Auslesegerät von der Betriebs- und Auswerteschaltung signalisiert und zeigen einen Insektenbefall, insbesondere einen Termitenbefall an.

Die bekannte Betriebs- und Auswerteschaltung benutzt einen Spannungsteiler aus dem RFID-Widerstand und einem weiteren Widerstand. Ein Mittelabgriff des Spannungsteilers steuert einen Transistor, dessen Arbeitsstromstrecke zwischen einem Massepotenzial und einem Anschluss liegt, an dem ein Auslesegerät über den Transponder ein Versorgungspotenzial erzeugt. Über einen Pull-Down-Widerstand wird ein Kollektoranschluss des Transistors im stromlosen Zustand auf das Massepotenzial gezogen.

Im unbeschädigten Zustand ohne Insektenbefall besitzt der RFID-Widerstandsstreifen einen vergleichsweise kleinen Widerstand, so dass bei einem Aufbau des Versorgungspotenzials über den Transistor der größte Teil der am Spannungsteiler anliegenden Spannung über dem weiteren Widerstand abfällt. Am Mittelabgriff stellt sich dann nur ein kleines Potenzial ein, das nicht ausreicht, um den Transistor leitend zu steuern. Die Arbeitsstromstrecke ist daher näherungsweise stromlos, so dass das Sensorpotenzial wegen des Pull-Down-Widerstandes etwa dem Massepotenzial entspricht.

Bei Insektenbefall vergrößert sich der Widerstand des RFID-Widerstandsstreifens. Als Folge tritt am Mittelabgriff des Spannungsteilers eine erhöhte Spannung auf, die den Transistor leitfähig steuert, was einen Strom über dessen Arbeitsstromstrecke und damit einen Spannungsabfall über dem Pull-Down-Widerstand ermöglicht. Der Spannungsabfall wird über einen Schwellenwertdetektor erfasst und ein Überschreiten des Schwellenwertes wird dem Auslesegerät über die Transponder-Verbindung signalisiert.

Bei der bekannten Schaltung sind der weitere Widerstand, der Transistor und eine Resonanzkapazität des Transponders außerhalb des Transpondergehäuses auf einer Platine des Insektensensors angeordnet. Zur Versorgung der externen Bauelemente muss bei der bekannten Schaltung und Widerstandswerten des Widerstandsstreifens zwischen 15 Kilo-Ohm im Neuzustand und ca. 100 Kilo-Ohm für den sogenannten trip point, der einen Insektenbefall charakterisiert, ein Strom von 4 bis 10 Mikroampere bereitgestellt werden, um im Transistor eine öffnende Basis-Emitterspannung von ca. 0,7 Volt zu erzielen. Da dieser Strom über den Transponder induziert werden muss, geht mit dem hohen Strombedarf eine hohe Dämpfung des Eingangsschwingkreises der Schaltung einher, was die Lesereichweite beeinträchtigt. Der hohe Strombedarf verringert also die Entfernung, bis zu der ein Stimulieren und Auslesen der Schaltung mit einem Transponder-Auslesegerät möglich ist.

Aus US 4,398,145 ist eine Schaltung bekannt, bei der die Änderung des Widerstandes festgestellt wird, indem ein Strom durch eine Serienschaltung aus dem Widerstand und einem Referenzwiderstand geleitet wird Die infolgedessen über dem Widerstand abfallende Spannung wird mittels eines Spannungskomparators mit einer Referenzspannung verglichen, um ein von der Differenzspannung abhängiges Signal zu erzeugen. Dieses Signal wird einem Stromverstärker zugeführt, der den durch die Serienschaltung fließenden Strom bereitstellt. Dieser Strom wird hierbei so eingestellt, daß die über dem Widerstand abfallende Spannung konstant bleibt. Die Änderung des Widerstandes wird festgestellt, indem die Änderung der über dem Referenzwiderstand abfallenden Spannung überwacht wird.

Vor diesem Hintergrund besteht die Aufgabe der Erfindung in der Angabe einer Betriebs- und Auswerteschaltung für einen Insektensensor, die die o.g. Nachteile vermeidet und die insbesondere bei gleicher Energieabstrahlung des Auslesegeräts, die Lesereichweite vergrößert.

Diese Aufgabe wird bei einer Betriebs- und Auswerteschaltung der eingangs genannten Art durch die Merkmale des Patentanspruchs 1 gelöst.

Diese Merkmale ermöglichen eine energiesparende Abfrage des Insektensensors, was die Funktionssicherheit erhöht und die Lesereichweite vergrößert. Die stimulierbare Konstantspannungsquelle erzeugt unabhängig vom Wert des Widerstands stets den gleichen Spannungsabfall über dem Widerstand. Eine vom Transponder stimulierte relativ kleine Messspannung von U_mess = 20mV erzeugt beim Trip Point des Widerstandsstreifens (100 Kiloohm) einen Strom von 200 nA. Bei konstanter Messspannung ist dieser Strom alleine durch den Widerstandswert des Papierstreifens bestimmt. Es hat sich gezeigt, dass diese Messspannung bereits ausreicht, um eine Unterscheidung von nicht mit Insekten befallenen Widerstandsstreifen und mit Insekten befallenen Sensoren zu ermöglichen. Da diese Messspannung wesentlich kleiner sein kann als die 0,7 V, die bei der bekannten Lösung zur Aufsteuerung des Transistors notwendig sind, kommt die erfindungsgemäße Lösung mit verringerter Energie aus. Da die Energie über einen Transponder zugeführt wird, ist mit dieser Verringerung des Energiebedarfs eine Erhöhung der Lesereichweite verbunden.

Die Erfindung erlaubt darüber hinaus einen Verzicht auf schaltungsexterne Bauteile zur Auswertung des Widerstandes. Damit ist eine Kosteneinsparung beim Zusammenbau des Insektensensors verbunden.

Erfindungsgemäß ist vorgesehen, dass die Schaltung eine von der Konstantspannungsquelle gesteuerte Stromquelle aufweist, die zum Bereitstellen der Spannung einen vom Stromfluss durch den Widerstand abhängigen weiteren Strom erzeugt. Hierdurch wird eine vom Wert des Widerstands abhängige Stromstärke gewissermaßen als Ersatzgröße für den durch den Widerstand fließenden Strom bereitgestellt.

Eine bevorzugte Ausgestaltung zeichnet sich durch eine weitere Stromquelle und einen Knoten aus, wobei die weitere Stromquelle mit der gesteuerten Stromquelle in Reihe zwischen einem ersten Versorgungspotenzial und einem zweiten Versorgungspotenzial liegt und wobei der Knoten die Stromflüsse der weiteren Stromquelle und der gesteuerten Stromquelle addiert.

Durch das Addieren der beiden Ströme an dem Knoten wird das Potenzial des Knotens zu einem der beiden Versorgungspotenziale gezogen, wenn einer der beiden Ströme dominiert.

Im Ergebnis wird damit ein zwischen den beiden Versorgungspotenzialen variables Signal erzeugt, das vom Wert des Widerstands des Sensors abhängig ist Das variable Signal erlaubt die Detektion einer Widerstands-Schwellenwertüberschreitung, ohne dazu eine Triggerschwelle direkt durch einen über den Widerstand fließenden Strom zu erzeugen, wie es der bekannten Lösung entspricht. Insgesamt reicht im Rahmen dieser Ausgestaltung ein kleiner Spannungsabfall von ca. 20 mV am Messwiderstand aus, um damit ein digitales High-Low Signal aus dem Widerstandsverhalten des Messwiderstands zu erzeugen.

Bevorzugt ist ebenfalls eine Ausgestaltung mit einem Vergleichselement, das ein Potenzial, das sich am Knoten in Abhängigkeit von den Stromflüssen einstellt, mit einem vorbestimmten Schwellenwert vergleicht und beim Durchlaufen des Schwellenwertes eine Ausgangssignaländerung erzeugt.

Ein solcher Schwellenwertvergleich erlaubt eine zuverlässige Überprüfung des Messwiderstands auf einen Insektenbefall.

Bevorzugt ist auch, dass die Konstantspannungsquelle eine Stromregelschleife mit einem ersten Strompfad und einem zweiten Strompfad, einem ersten Stromspiegel und einem zweiten Stromspiegel aufweist, wobei der erste Stromspiegel im ersten Strompfad einen gleichen Strom erzeugt wie im zweiten Strompfad und der zweite Stromspiegel die Konstantspannung erzeugt und die gesteuerte Stromquelle steuert.

Eine solche Stromregelschleife hat den Vorteil, dass sie den zur Aufrechterhaltung der Konstantspannung notwendigen Stromfluss automatisch einstellt. Dadurch, dass der zweite Stromspiegel die gesteuerte Stromquelle steuert, ergibt sich, da der Strom durch die Strompfade wegen der konstanten Spannung von dem Wert des Messwiderstands abhängig ist, eine vom Wert des Messwiderstands abhängige Steuerung der Stromquelle, was für die Bereitstellung eines Signals für den Wert des Messwiderstands vorteilhaft ist.

Ferner ist bevorzugt, dass der erste Stromspiegel eine erste Diode und einen ersten Verstärker aufweist, wobei der erste Verstärker vom Kathodenpotenzial der ersten Diode gesteuert wird, und dass der zweite Stromspiegel eine zweite Diode und einen zweiten Verstärker aufweist, wobei der zweite Verstärker vom Kathodenpotenzial der zweiten Diode gesteuert wird.

Diese Ausgestaltung stellt eine einfache, weitgehend symmetrisch aufgebaute Stromregelschleife bereit, die sich mit verschiedenen Halbleitertechnologien wie der Bipolartechnologie oder der CMOS-Technologie realisieren lässt. Dabei ist es als Vorteil zu sehen, dass sich die Realisierung der Stromregelschleife sowohl in einen Bipolar-Prozess als auch in einen CMOS-Prozess integrieren lässt.

Bevorzugt ist auch, dass die erste Diode als erster Feldeffekttransistor, der erste Verstärker als zweiter Feldeffekttransistor, die zweite Diode als dritter MOS-Feldeffekttransistor und der dritte Verstärker als vierter MOS-Feldeffekttransistor realisiert sind, wobei der erste Feldeffekttransistor und der zweite Feldeffekttransistor von einem ersten Leitfähigkeitstyp und der dritte MOS-Feldeffekttransistor und der vierte MOS-Feldeffekttransistor von einem zweiten Leitfähigkeitstyp sind.

Eine solche Stromregelschleife zeichnet sich durch einen geringen Leistungsbedarf aus.

Eine weitere bevorzugte Ausgestaltung zeichnet sich dadurch aus, dass der erste und der zweite Feldeffekttransistor gleich sind und der dritte MOS-Feldeffekttransistor und der vierte MOS-Feldeffekttransistor verschiedene Kanallängen und/oder Kanalweiten aufweisen.

Der besondere Vorteil der verschiedenen Kanallängen und/oder Kanalweiten liegt darin, dass sich die konstante Messspannung zwischen den beiden Strompfaden einfach durch diese Parameter beeinflussen lässt. Bei von gleichen Strömen durchflossenen MOS-Feldeffekttransistoren stellen sich bei verschiedenen Quotienten aus Kanallänge und Kanalweite unterschiedliche Gate-Source-Spannungen ein. Im Rahmen dieser Ausgestaltung erlaubt dieser Effekt die Erzeugung einer konstanten Potenzialdifferenz zwischen den beiden Strompfaden als Messspannung.

Ferner ist bevorzugt, dass die erste Diode als erster Bipolartransistor, der erste Verstärker als zweiter Bipolartransistor, die zweite Diode als dritter Bipolartransistor und der dritte Verstärker als vierter Bipolartransistor realisiert sind, wobei der erste Bipolartransistor und der zweite Bipolartransistor von einem ersten Leitfähigkeitstyp und der dritte Bipolartransistortransistor und der vierte Bipolartransistor von einem zweiten Leitfähigkeitstyp sind.

Bevorzugt ist auch, dass der erste und der zweite Bipolartransistor gleich sind und der dritte Bipolartransistor und der vierte Bipolartransistor verschiedene Basis-Emitter-Flächen aufweisen.

Auch diese Ausgestaltung führt zu einer Potenzialdifferenz zwischen beiden Strompfaden, die sich als Funktion der Transistorgeometrie einstellen lässt. Es ergeben sich also ähnliche Vorteil wie bei der analogen Realisierung mit Hilfe von MOS-Feldeffekttransistoren.
Eine weitere bevorzugte Ausgestaltung zeichnet sich durch eine Strombegrenzungsschaltung aus, die den Strom durch die Stromregelschleife auf einen vorgegebenen Maximalwert begrenzt.

Diese Ausgestaltung dient dazu, den Strom durch die Schaltung auch bei einem Kurzschluss zwischen den Versorgungspotenzialen nicht unnötig anwachsen zu lassen.

Bevorzugt ist auch, dass die Schaltung zusammen mit einem Transponder in einem gemeinsamen Gehäuse untergebracht ist, in dem auch eine Kapazität eines Empfangsschwingkreises des Transponders untergebracht ist.

Durch die gemeinsame Unterbringung kann insbesondere die Kapazität, die bei der per se bekannten Lösung außerhalb des Transponders auf einer Platine angeordnet war, in das Gehäuse integriert werden. Dadurch kann zum Beispiel eine Empfangsspule direkt an Pins des Gehäuses angeschlossen werden. Wird die Empfangsspule so dimensioniert, dass zusammen mit der im Gehäuse integrierten Kapazität bei einer definierten Frequenz, zum Beispiel bei f=125kHz, der Resonanzfall eintritt, so kann mit optimalen Spannungsverhältnissen am Transponder gerechnet werden. Es entfällt also der bei der bekannten Lösung notwendige externe Resonanzkondensator auf der Applikationsplatine. Im Rahmen einer anderen Ausgestaltung kann eine in das Transpondergehäuse integrierte Kapazität auch in Verbindung mit einer externen Kapazität zur Abstimmung des Resonanzeingangskreises verwendet werden. Dies erlaubt die bedarfsgerechte Verwendung von Spulen verschiedener Induktivität in verschiedenen Anwendungsfällen. Diese Ausgestaltung sorgt also für eine größtmögliche Flexibilität in der Anbindung der Empfangsspulen. Dies kann vor allem auch dadurch erreicht werden, weil die integrierte Kapazität mit +-5% Genauigkeit gefertigt werden kann.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein Gesamtsystem aus Widerstand, Betriebs- und Auswerteschaltung und Auslesegerät;
- Fig. 2: ein erstes Ausführungsbeispiel der Erfindung in allgemeiner Form;
- Fig.3: ein detaillierteres Ausführungsbeispiel der Erfindung mit MOS-Feldeffekttransistoren;
- Fig. 4: eine Stromregelschleife aus Bipolartransistoren; und
- Fig. 5: Einzelheiten eines Transpondergehäuses.

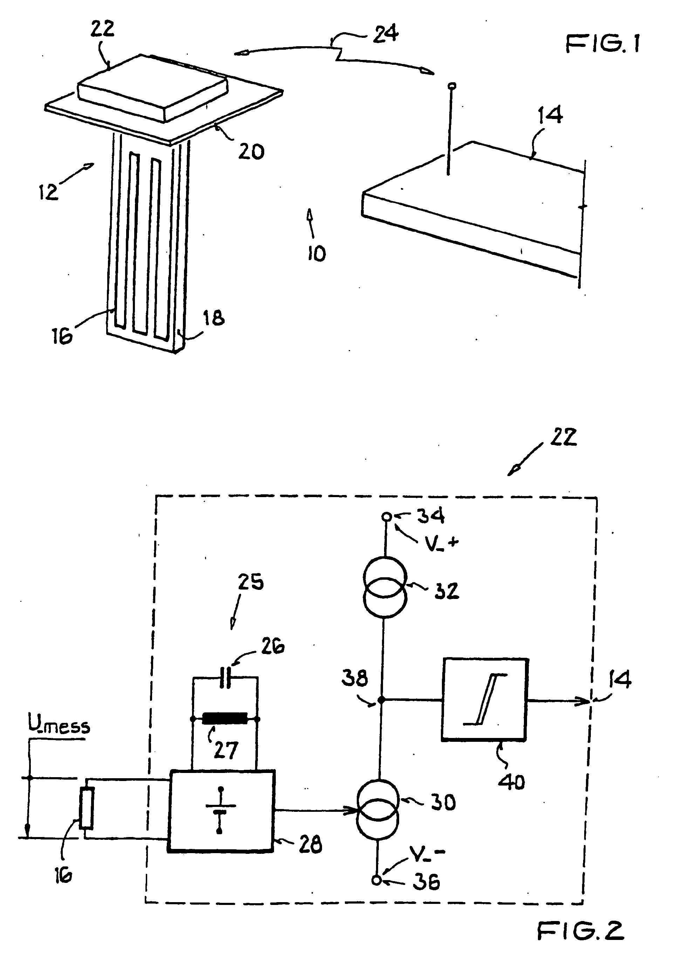

Fig. 1 zeigt ein Gesamtsystem 10 aus Insektensensor 12 und Auslesegerät 14. Der Insektensensor 12 weist einen Messwiderstand 16 auf, der beispielsweise auf einen mit einem Insektenlockstoff imprägnierten Papierstreifen 18 aufgedruckt ist. Der Messwiderstand ist an einer Platine 20 befestigt, die auch die Betriebs- und Auswerteschaltung 22 des Insektensensors 12 trägt. Über eine Transponder-Feldverbindung 24 stimuliert das Auslesegerät 14 eine Erfassung des Messwiderstandswerts durch die Betriebs- und Auswerteschaltung 22 und zeigt das Ergebnis zum Beispiel einem Benutzer an.

Fig. 2 zeigt ein Ausführungsbeispiel einer erfindungsgemäßem Betriebs- und Auswerteschaltung 22 mit einer über einen Eingangsschwingkreis 25 aus einer Kapazität 26 und einer Induktivität 27 stimulierbaren Konstantspannungsquelle 28. Der Eingangsschwingkreis tauscht über die Transponder-Feldverbindung 24 aus Fig. 1 mit dem Auslesegerät 14 Signale aus. Die Konstantspannungsquelle 28 legt nach Stimulation über die Transponder-Feldverbindung 24 eine konstante Spannung U_mess an den Messwiderstand 16 an und erzeugt damit einen Stromfluss durch den Messwiderstand. Aus dem Stromfluss leitet die Schaltung 22 ein Spannungssignal U_K ab und vergleicht dieses mit einem Schwellenwert.

Für den Vergleich mit dem Schwellenwert weist die Schaltung 22 in einer Ausgestaltung eine von der Konstantspannungsquelle 28 gesteuerte Stromquelle 30 auf, die einen vom Stromfluss durch den Widerstand 16 abhängigen Strom erzeugt. Eine weitere Stromquelle 32 liegt mit der gesteuerten Stromquelle 30 in Reihe zwischen einem ersten Versorgungspotenzial V_+ am Anschluss 34 und einem zweiten Versorgungspotenzial V_ - am Anschluss 36. Zwischen beiden Stromquellen 30, 32 liegt ein Knoten 38, der die Stromflüsse der weiteren Stromquelle 32 und der gesteuerten Stromquelle 30 addiert.

Ein Vergleichselement 40, beispielsweise ein Komparator im Form eines Schmitt-Triggers, vergleicht das sich am Knoten 38 in Abhängigkeit von den Stromflüssen einstellende Potenzial U_K mit einem vorbestimmten Schwellenwert und erzeugt beim Durchlaufen des Schwellenwertes eine Ausgangssignaländerung. Die weitere Stromquelle 32 bietet zum Beispiel kontinuierlich einen Stromfluss zum Knoten 38 an. Die gesteuerte Stromquelle 30 zieht bei hohem Wert des Messwiderstands 16 einen kleinen Strom von dem Knoten 38 und zieht bei niedrigem Wert des Messwiderstands 16 einen großen Strom von dem Knoten 38. Solange nur der kleine Strom gezogen wird, wird das Potenzial U_K am Knoten 38 in Richtung des positiveren Versorgungspotenzials V_+ gezogen. Steigt der vom Knoten 38 gezogene Strom dagegen an, so wird das Potenzial U_K am Knoten 38 in Richtung des unteren Versorgungspotenzials V_- gezogen. Der Komparator 40 ist zum Beispiel so abgestimmt, dass der Schwellenwert zwischen dem oberen und dem unteren Versorgungspotenzial liegt. Ein Durchlaufen des Schwellenwertes wird über die Transponder-Feldverbindung 24 an das Auslesegerät 14 übermittelt und dort zum Beispiel angezeigt oder für eine spätere Anzeige abgespeichert.

Fig. 1 und 2 zusammen zeigen damit eine Betriebs- und Auswerte-Schaltung 22 eines Insekten-Sensors 12, der einen von einem Insektenbefall abhängigen Widerstand 16 aufweist, wobei die Schaltung 22 bei einer Stimulation über einen Transponder einen Stromfluss durch den Widerstand 16 erzeugt und eine Änderung des Widerstands 16 als Änderung einer Spannung erfasst und mit einem vorbestimmten Schwellenwert vergleicht. Eine von dem Transponder stimulierbare Konstantspannungsquelle 22 ist so mit dem Widerstand 16 verbunden, dass über dem Widerstand 16 eine konstante Spannung U_mess abfällt.

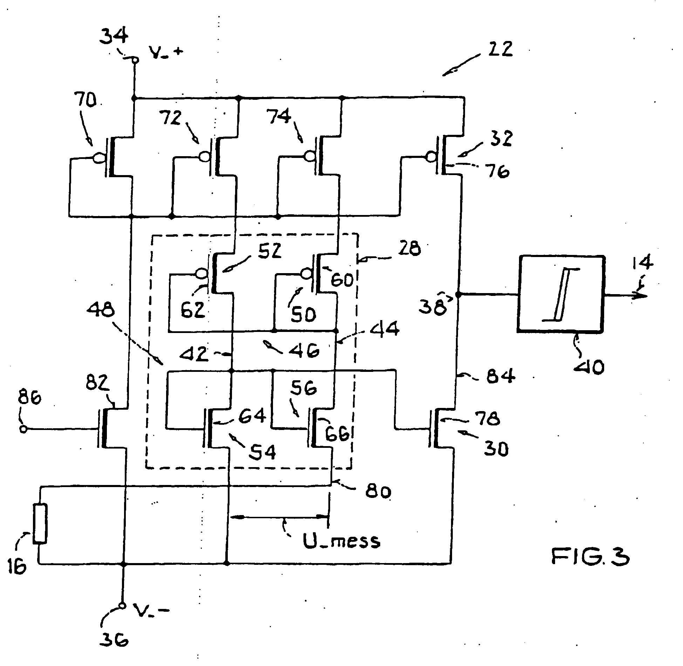

Fig. 3 zeigt ein detailliertes Schaltungsbeispiel der Schaltung 22 mit einer konkreten schaltungstechnischen Ausgestaltung der Konstantspannungsquelle 28, Versorgungspotenzialanschlüssen 34, 36, Ausgestaltungen der gesteuerten Stromquelle 30 und der weiteren Stromquelle 32 sowie dem Knoten 38. Die Konstantspannungsquelle 28 weist eine Stromregelschleife mit einem ersten Strompfad 42 und einem zweiten Strompfad 44, einem ersten Stromspiegel 46 und einem zweiten Stromspiegel 48 auf, wobei der erste Stromspiegel 46 im ersten Strompfad 42 einen gleichen Strom erzeugt wie im zweiten Strompfad 44 und der zweite Stromspiegel 48 die Konstantspannung U_mess erzeugt und die gesteuerte Stromquelle 30 steuert.

Der erste Stromspiegel 46 weist eine erste Diode 50 und einen ersten Verstärker 52 auf, wobei der erste Verstärker 52 vom Kathodenpotenzial der ersten Diode 50 gesteuert wird. Analog weist der zweite Stromspiegel 48 eine zweite Diode 54 und einen zweiten Verstärker 56 auf, wobei der zweite Verstärker 56 vom Kathodenpotenzial der zweiten Diode 54 gesteuert wird.

Die erste Diode 50 kann als erster Feldeffekttransistor 60, der erste Verstärker 52 als zweiter Feldeffekttransistor 62, die zweite Diode 54 als dritter MOS-Feldeffekttransistor 64 und der zweite Verstärker 56 als vierter MOS-Feldeffekttransistor 66 realisiert sein, wobei der erste Feldeffekttransistor 60 und der zweite Feldeffekttransistor 62 von einem ersten Leitfähigkeitstyp und der dritte MOS-Feldeffekttransistor 64 und der vierte MOS-Feldeffekttransistor von einem zweiten Leitfähigkeitstyp 66 sind. In der Ausgestaltung nach Fig. 3 handelt es sich bei den Transistoren 60, 62 um PMOS-Transistoren und bei den Transistoren 64, 66 um NMOS-Transistoren. Ganz allgemein bezeichnet ein Kreis am Gateanschluss eines FET in dieser Anmeldung einen PMOS-FET, während NMOS-FET ohne einen solchen Kreis am Gate dargestellt sind.

Die Transistoren 60, 62, 64 und 66 bilden eine geschlossene Regelschleife mit einer anfänglichen Schleifenverstärkung, die größer als 1 ist. Als Folge wächst der Strom in beiden Strompfaden 42, 44 bis zur einem Gleichgewichtswert an, bei dem sich die Schleifenverstärkung durch die Spannung über dem Messwiderstand 16 auf den Wert 1 reduziert.

Der erste Stromspiegel 46 sorgt insbesondere für gleiche Stromstärken in beiden Strompfaden 42, 44. Dabei sind der erste 60 und der zweite Feldeffekttransistor 62 bevorzugt gleich. Der dritte MOS-Feldeffeffektransistor 64 und der vierte MOS-Feldeffekttransistor 66 sind dagegen insofern verschieden, als das sie unterschiedliche Kanallängen und/oder Kanalweiten aufweisen. Da sie von gleichen Strömen durchflossen werden, stellen sich aufgrund der unterschiedlichen Kanallängen und/oder Kanalweiten in beiden Transistoren 64, 66 unterschiedliche Spannungen zwischen Gate und Source und damit zwischen beiden Strompfaden 42, 44 der Stromregelschleife ein. Es ist diese durch bei gleichen Strömen unterschiedliche Kanalabmessungen erzeugte Potenzialdifferenz U_mess, die an dem Messwiderstand 16 liegt. Durch die Stromregelschleife stellt sich in den Strompfaden 42, 44 jeweils ein Strom ein, der an dem Messwiderstand 16 die Differenz der Gate/Source-Spannungen der Transistoren 64 und 66 abfallen lässt.

Um einen unerwünschten Stromanstieg bei kleinem Wert des Messwiderstands 16 oder einem Kurzschluss nach Masse zu verhindern, kann eine Strombegrenzungsschaltung aus Transistoren 70, 72, 74 den Strom durch die Stromregelschleife auf einen vorgegebenen Maximalwert begrenzen.

Die weitere Stromquelle 32, die einen Strom zu dem Knoten 38 liefert, kann ebenfalls als Transistor 76 realisiert sein. Gleiches gilt für die gesteuerte Stromquelle 30, die Strom von dem Knoten 38 zieht und die als Transistor 78 realisiert sein kann.

Zusammenfassend lässt sich die Funktion der Schaltung 22 aus Fig. 2 wie folgt beschreiben. Über die Versorgungspotenzialanschlüsse 34, 36 wird vom Eingangsschwingkreis 25 aus Fig. 2 eine relativ kleine Gate/Source-Spannungsdifferenz der Transistoren 64 und 66 als Messspannung U_mess, beispielsweise U_mess = 20mV, erzeugt. Dies erzeugt beim Trip Point des Messwiderstands 16, also bei einem Wert des Messwiderstands 16 von 100 kOhm einen Strom von I=200nA. Bei konstanter Messspannung U_mess ist dieser Strom alleine durch den Widerstandswert des Papierstreifens, also des Messwiderstands 16 bestimmt. Erreicht nun der externe Messwiderstand 16, der zwischen den Anschlüssen 36 und 80 liegt, einen Wert von R = 100 kOhm, so fließt in den beiden Pfaden 42, 44 der Stromregelschleife ein Strom von jeweils I_S = 200 nA. Um bei einem Kurzschluss des Messwiderstandes 16 den Strom nicht unnötig anwachsen zu lassen, wird dieser durch strombegrenzende Transistoren 72 und 74 auf Maximalwerte, zum Beispiel auf jeweils I_max = 400 nA begrenzt. In der kompletten Schaltung 22 kann also der Gesamtstrom einen vorgegebenen Höchstwert nicht übersteigen.

Zur Auswertung wird aus dem Strom durch den Messwiderstand 16 ein High- oder Low-Potenzial erzeugt, das vom Wert des Widerstands 16 abhängig ist. Durch die Dimensionierung der Transistoren 82, 70 und 76 wird erreicht, dass Transistor 76 als Stromquelle 32 einen konstanten Strom von 200nA anbietet.

Der in der Stromregelschleife erzeugte und vom Wert des Messwiderstands 16 abhängige Strom wird aus dem zweiten Stromspiegel durch den Transistor 78 als steuerbare Stromquelle 20 in den Ausgangspfad 84 zum Knoten 38 gespiegelt. Ist der Wert des Messwiderstands 16 größer als 100 kOhm, so fließt ein Strom I < 20mV/R = 200nA und das Potenzial am Knoten 38 wird durch die Stromquelle 32 nach V_+ gezogen. Ist andererseits der Wert der Messwiderstands 16 kleiner als 100 kOhm, so wird der Strom, den die gesteuerte Stromquelle 30 anbietet, größer als 200 nA sein und das Potenzial am Knoten 38 wird gegen V_- gezogen. Das nachfolgende Vergleichselement 40, bspw. ein Schmitt-Trigger, bereitet dieses Signal zur digitalen Weiterverarbeitung auf.

Es gelingt also hiermit einen Schwellwert eines Widerstandes zu detektieren ohne dabei eine Triggerschwelle direkt durch einen über ihn fließenden Strom zu erzeugen, wie dies z.B. in der per se bekannten Lösung der Fall war. Es reicht hier ein Spannungsabfall am Messwiderstand von Umeß = 20mV aus, um damit ein digitales High-Low Signal zu erzeugen. Der Start einer Messung kann über den Anschluss 86 ausgelöst werden.

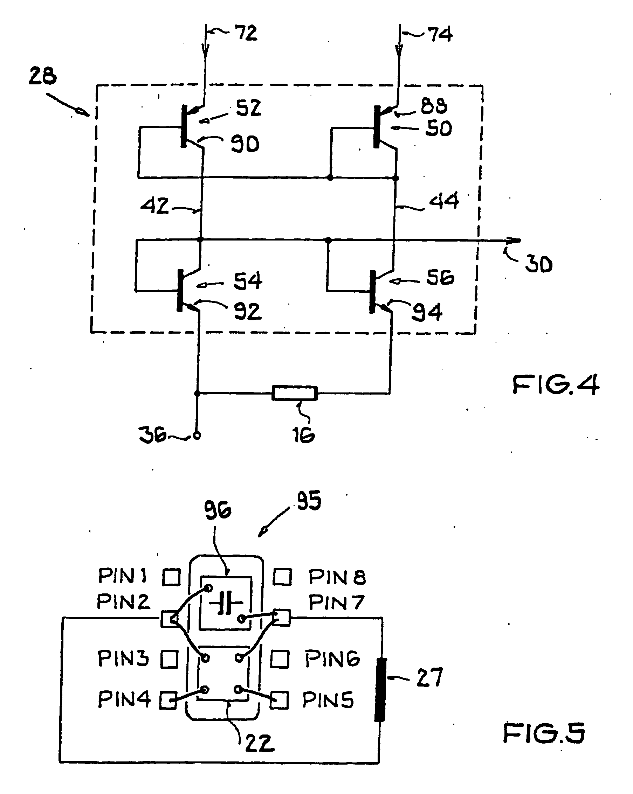

Fig. 4 zeigt eine alternative Realisierung der Konstantspannungsquelle 28, die mit Bipolartransistoren 88, 90, 92. 94 arbeitet. Alternativ zu der in Fig. 3 dargestellten Realisierung mit Feldeffekttransistoren 62, 64, 66, 68 kann die erste Diode 50 als erster Bipolartransistor 88, der erste Verstärker 52 als zweiter Bipolartransistor 90, die zweite Diode 54 als dritter Bipolartransistor 92 und der dritte Verstärker 56 als vierter Bipolartransistor 94 realisiert sein, wobei der erste Bipolartransistor 88 und der zweite Bipolartransistor 90 von einem ersten Leitfähigkeitstyp (z.B. pnp) und der dritte Bipolartransistortransistor 92 und der vierte Bipolartransistor 94 von einem zweiten Leitfähigkeitstyp (z.B. npn) sind.

Im Rahmen einer solchen Ausgestaltung der Konstantspannungsquelle 28 mit Bipolartransistoren 88, 90, 92, 94 wird die Konstantspannung U_mess über dem Messwiderstand 16 dadurch erzielt, dass der dritte Bipolartransistor 92 und der vierte Bipolartransistor 94 verschiedene Basis-Emitter-Flächen aufweisen, wobei der erste 88 und der zweite Bipolartransistor 90 gleich sind, was wieder für gleiche Stromstärken in beiden Strompfaden 42, 44 sorgt.

Weitere Ausgestaltungen der Erfindung betreffen die Anbindung einer Empfangsspule/Induktivität 27 eines Eingangsschwingkreises 25 in Fig. 2 an den Transponder. Wie eingangs erwähnt, muss bei der bekannten Lösung auf der Platine 20 des Sensors 12 aus Fig. 1 ein Resonanzkondensator vorgesehen werden, um eine adäquate Spannung am Transpondergehäuse bereitzustellen. Im Gegensatz dazu wird vorgeschlagen, die Schaltung zusammen mit einem Transponder in einem gemeinsamen Gehäuse unterzubringen, in dem auch eine Kapazität 26 eines Empfangsschwingkreises 25 des Transponders untergebracht ist.

Fig. 5 zeigt schematisch ein verbessertes Transpondergehäuse 95 als Gehäuse der Schaltung 22, in das ein Resonanzkondensator 96 (C-340pF +-5%) integriert ist und an dessen Pin 2 und Pin 7 direkt eine Empfangsspule 27 angeschlossen werden kann. Es ergeben sich nun mehrere Möglichkeiten dieses Transpondergehäuse 95 zu nutzen.

Das in der Fig. 5 gezeigte Bonding erlaubt es, direkt eine Empfangsspule an die Pins 2 und 7 anzuschließen. Wird diese zusammen mit der im Gehäuse integrierten Kapazität so dimensioniert, dass der Resonanzfall bei einer Frequenz f = 125 kHz eintritt, so kann mit optimalen Spannungsverhältnissen am Transponder gerechnet werden. Es entfällt also der bei der per se bekannten Lösung vorhandene externe Resonanzkondensator auf der Platine 20 des Sensors 12.

Durch eine Bonding-Variante derart, dass der im Gehäuse 95 integrierte Kondensator auf die Pins 1 und 8 geführt wird, kann - bei Verwendung einer Spule, die anders dimensioniert ist als vorstehend aufgeführt wurde - eine externe Kapazität zur Abstimmung des Resonanzeingangskreises verwendet werden. Dies erlaubt eine flexible Nutzung verschiedener Induktivität zur kundenspezifischen Anpassung von Sensoren 12.

Als dritte Variante besteht die Möglichkeit das Pin 2/7 Bonding beizubehalten und Streuungen in der Spulenproduktion durch externe Trimmkondensatoren auszugleichen. Die hohe Flexibilität wird vor allem auch dadurch erreicht, weil die integrierte Kapazität mit +-5% Genauigkeit gefertigt werden kann.

## Patentansprüche

1. Betriebs- und Auswerte-Schaltung (22) verbindbar mit einem Insekten-Sensor (12), der einen von einem Insektenbefall abhängigen Widerstand (16) aufweist, wobei die Schaltung (22) eine Änderung des Widerstands (16) als Änderung einer Spannung (U_K) erfasst und mit einem vorbestimmten Schwellenwert vergleicht, mit einer von einem Transponder stimulierbare Konstantspannungsquelle (28), die bei einer Stimulation über den Transponder einen Stromfluss durch den Widerstand (16) erzeugt und so mit dem Widerstand (16) verbunden ist, **dadurch gekennzeichnet, dass** über dem Widerstand (16) eine konstante Spannung (U_mess) abfällt, und durch eine von der Konstantspannungsquelle (28) gesteuerte Stromquelle (30), die zum Bereitstellen der Spannung (U_K) einen vom Stromfluss durch den Widerstand (16) abhängigen weiteren Strom erzeugt.

2. Schaltung (22) nach Anspruch 1, **gekennzeichnet durch** eine weitere Stromquelle (32), die mit der gesteuerten Stromquelle (30) in Reihe zwischen einem ersten Versorgungspotenzial (V_+) und einem zweiten Versorgungspotenzial (V_-) liegt, und einen Knoten (38), der die Stromflüsse der weiteren Stromquelle (32) und der gesteuerten Stromquelle (30) addiert.

3. Schaltung (22) nach Anspruch 2, **gekennzeichnet durch** ein Vergleichselement (40), das ein Potenzial (U_K), das sich am Knoten (38) in Abhängigkeit von den Stromflüssen einstellt, mit einem vorbestimmten Schwellenwert vergleicht und beim Durchlaufen des Schwellenwertes eine Ausgangssignaländerung erzeugt.

4. Schaltung (22) nach wenigstens einem der vorhergehenden Ansprüche, **dadurch gekennzeichnet, dass** die Konstantspannungsquelle (28) eine Stromregelschleife mit einem ersten Strompfad (42) und einem zweiten Strompfad (44), sowie einem ersten Stromspiegel (46) und einem zweiten Stromspiegel (48) aufweist, wobei der erste Stromspiegel (46) im ersten Strompfad (42) einen gleichen Strom erzeugt wie im zweiten Strompfad (44) und der zweite Stromspiegel (48) die Konstantspannung erzeugt und die gesteuerte Stromquelle (30) steuert.

5. Schaltung (22) nach Anspruch 4, **dadurch gekennzeichnet, dass** der erste Stromspiegel (46) eine erste Diode (50) und einen ersten Verstärker (52) aufweist, wobei der erste Verstärker (52) vom Kathodenpotenzial der ersten Diode (50) gesteuert wird, und dass der zweite Stromspiegel (48) eine zweite Diode (54) und einen zweiten Verstärker (56) aufweist, wobei der zweite Verstärker (56) vom Kathodenpotenzial der zweiten Diode (54) gesteuert wird.

6. Schaltung (22) nach Anspruch 5, **dadurch gekennzeichnet, dass** die erste Diode (50) als erster Feldeffekttransistor (60), der erste Verstärker (52) als zweiter Feldeffekttransistor (62), die zweite Diode (54) als dritter MOS-Feldeffekttransistor (64) und der dritte Verstärker (56) als vierter MOS-Feldeffekktransistor (66) realisiert sind, wobei der erste Feldeffekttransistor (60) und der zweite Feldeffekttransistor (62) von einem ersten Leitfähigkeitstyp und der dritte MOS-Feldeffekttransistor (64) und der vierte MOS-Feldeffekttransistor (66) von einem zweiten Leitfähigkeitstyp sind.

7. Schaltung (22) nach Anspruch 6, **dadurch gekennzeichnet, dass** der erste (60) und der zweite Feldeffekttransistor (62) gleich sind und der dritte MOS-Feldeffeffekttransistor (54) und der vierte MOS-Feldeffekttransistor (56) verschiedene Kanallängen und/oder Kanalweiten aufweisen.

8. Schaltung (22) nach Anspruch 7, **dadurch gekennzeichnet, dass** die erste Diode (50) als erster Bipolartransistor (88), der erste Verstärker (52) als zweiter Bipolartransistor (90), die zweite Diode (54) als dritter Bipolartransistor (92) und der dritte Verstärker (56) als vierter Bipolartransistor (94) realisiert sind, wobei der erste Bipolartransistor (88) und der zweite Bipolartransistor (90) von einem ersten Leitfähigkeitstyp und der dritte Bipolartransistortransistor (92) und der vierte Bipolartransistor (94) von einem zweiten Leitfähigkeitstyp sind.

9. Schaltung (22) nach Anspruch 8, **dadurch gekennzeichnet, dass** der erste (88) und der zweite Bipolartransistor (90) gleich sind und der dritte Bipolartransistor (92) und der vierte Bipolartransistor (94) verschiedene Basis-Emitter-Flächen aufweisen.

10. Schaltung (22) nach einem der Ansprüche 4 bis 9, **gekennzeichnet durch** eine Strombegrenzungsschaltung, die den Strom **durch** die Stromregelschleife auf einen vorgegebenen Maximalwert begrenzt.

11. Schaltung (22) nach wenigstens einem der vorhergehenden Ansprüche, **dadurch gekennzeichnet, dass** sie zusammen mit einem Transponder in einem gemeinsamen Gehäuse (95) untergebracht ist, in dem auch eine Kapazität (96) eines Empfangsschwingkreises des Transponders untergebracht ist.

## Claims

1. Operating and evaluating circuit (22) connectible with an insect sensor (12) having a resistance (16) dependent on an insect infestation, wherein the circuit (22) detects a change of the resistance (16) as a change of a voltage (U_K) and compares it with a predetermined threshold value, with a constant voltage source (28) which can be stimulated by a transponder and which in the case of stimulation by way of the transponder produces a current flow through the resistance (16) and is thus connected with the resistance (16), **characterised in that** a constant voltage (U_mess) decays by way of the resistance (16), and **characterised by** a current source (30), which is controlled by the constant voltage source (28) and which for providing the voltage (U_K) produces a further current dependent on the current flow through the resistance (16).

2. Circuit (22) according to claim 1, **characterised by** a further current source (32) which is in series with the controlled current source (30) between a first supply potential (V_+) and a second supply potential (V_-), and a junction (38) which summates the current flows of the further current source (32) and the controlled current source (30).

3. Circuit (22) according to claim 2, **characterised by** a comparison element (40), which compares a potential (U_K), which is present at the junction (38) in dependence on the current flows, with a predetermined threshold value and in the event of passing the threshold value produces an output signal change.

4. Circuit (22) according to at least one of the preceding claims, **characterised in that** the constant voltage source (22) comprises a current regulating loop with a first current path (42) and a second current path (44) as well as a first current mirror (46) and a second current mirror (48), wherein the first current mirror (46) produces in the first current path (42) the same current as in the second current path (44) and the second current mirror (48) produces the constant voltage and controls the controlled current path (30).

5. Circuit (22) according to claim 4, **characterised in that** the first current mirror (46) comprises a first diode (50) and a first amplifier (52), wherein the first amplifier (52) is controlled by the cathode potential of the first diode (50) and that the second current mirror (48) comprises a second diode (54) and a second amplifier (56), wherein the second amplifier (56) is controlled by the cathode potential of the second diode (54).

6. Circuit (22) according to claim 5, **characterised in that** the first diode (50) is realised as a first field effect transistor (60), the first amplifier (52) as a second field effect transistor (62), the second diode (54) as a third MOS field effect transistor (64) and the third amplifier (56) as a fourth MOS field effect transistor (66), wherein the first field effect transistor (60) and the second field effect transistor (62) are of a first conductivity type and the third MOS field effect transistor (64) and the fourth MOS field effect transistor (66) are of a second conductivity type.

7. Circuit (22) according to claim 6, **characterised in that** the first field effect transistor (60) and the second field effect transistor (62) are the same and the third MOS field effect transistor (54) and the fourth MOS field effect transistor (56) have different channel lengths and/or channel widths.

8. Circuit (22) according to claim 7, **characterised in that** the first diode (50) is realised as a first bipolar transistor (88), the first amplifier (52) as a second bipolar transistor (90), the second diode (54) as a third bipolar transistor (92) and the third amplifier (56) as a fourth bipolar transistor (94), wherein the first bipolar transistor (88) and the second bipolar transistor (90) are of a first conductivity type and the third bipolar transistor (92) and the fourth bipolar transistor (94) are of a second conductivity type.

9. Circuit (22) according to claim 8, **characterised in that** the first bipolar transistor (88) and the second bipolar transistor (90) are the same and the third bipolar transistor (92) and the fourth bipolar transistor (94) have different base-emitter areas.

10. Circuit (22) according to any one of claims 4 to 9, **characterised by** a current limiting circuit which limits the current through the current regulating loop to a predetermined maximum value.

11. Circuit (22) according to at least one of the preceding claims, **characterised in that** it is accommodated together with a transponder in a common housing (95) in which a capacitor (96) of a receiving oscillator circuit of the transponder is also accommodated.

## Revendications

1. Circuit de fonctionnement et d'exploitation (22) pouvant être connecté à un détecteur d'insectes (12), présentant une résistance (16) dépendante d'une attaque d'insectes, le circuit (22) détectant un changement de la résistance (16) comme une modification de tension (U_K) et la comparant à une valeur de seuil prédéterminée, circuit comprenant une source de tension constante (28) stimulable par un transpondeur qui, lorsqu'elle est stimulée par le transpondeur, génère un flux de courant à travers la résistance (16) et est ainsi reliée à la résistance (16), **caractérisé en ce qu'**au-dessus de la résistance (16) une tension constante (U_mess) décroît, et **caractérisé par** une source de courant (30) commandée par la source de tension constante (28), qui génère un courant supplémentaire dépendant de l'intensité du courant à travers la résistance (16) pour produire la tension (U_K).

2. Circuit (22) selon la revendication 1, **caractérisé par** une source de courant supplémentaire (32), montée en série avec la source de courant commandée (30) entre un premier potentiel d'alimentation (V_+) et un deuxième potentiel d'alimentation (V_-), et par un noeud (38), qui additionne les flux de courant de la source de courant supplémentaire (32) et de la source de courant commandée (30).

3. Circuit (22) selon la revendication 2, **caractérisé par** un élément de comparaison (40) qui compare un potentiel (U_K), qui se règle au niveau du noeud (38) en fonction des intensités de courant, à une valeur de seuil prédéterminée et génère une modification du signal de sortie lors du franchissement de la valeur de seuil.

4. Circuit (22) selon l'une au moins des revendications précédentes, **caractérisé en ce que** la source de tension constante (28) présente une boucle de régulation d'intensité comportant un premier trajet (42) de courant et un deuxième trajet (44) de courant, ainsi qu'un premier miroir de courant (46) et un deuxième miroir de courant (48), boucle dans laquelle le premier miroir de courant(46) génère dans le premier trajet (42) de courant un courant identique à celui du deuxième trajet (44) de courant et dans laquelle le deuxième miroir de courant (48) génère la tension constante et commande la source de courant commandée (30).

5. Circuit (22) selon la revendication 4, **caractérisé en ce que** le premier miroir de courant (46) présente une première diode (50) et un premier amplificateur (52), le premier amplificateur (52) étant commandé par le potentiel de cathode de la première diode (50), et **en ce que** le deuxième miroir de courant (48) présente une deuxième diode (54) et un deuxième amplificateur (56), le deuxième amplificateur (56) étant commandé par le potentiel de cathode de la deuxième diode (54).

6. Circuit (22) selon la revendication 5, **caractérisé en ce que** la première diode (50) est un transistor à effet de champ (60), le premier amplificateur (52) est un deuxième transistor à effet de champ (62), la deuxième diode (54) est un troisième transistor à effet de champ MOS (64) et le troisième amplificateur (56) est un quatrième transistor à effet de champ MOS (66), le premier transistor à effet de champ (60) et le deuxième transistor à effet de champ (62) correspondant à un premier type de conductivité, et le troisième transistor à effet de champ MOS (64) et le quatrième transistor à effet de champ (MOS (66) à un deuxième type de conductivité.

7. Circuit (22) selon la revendication 6, **caractérisé en ce que** le premier (60) et le deuxième transistor à effet de champ (62) sont identiques et **en ce que** le troisième transistor à effet de champ MOS (54) et le quatrième transistor à effet de champ MOS (56) présentent des longueurs de canaux et/ou des largeurs de canaux différentes.

8. Circuit (22) selon la revendication 7, **caractérisé en ce que** la première diode (50) est un premier transistor bipolaire (88), le premier amplificateur (52) est un deuxième transistor bipolaire champ (90), la deuxième diode (54) est un troisième transistor bipolaire (92) et le troisième amplificateur (56) est un quatrième transistor bipolaire (94), le premier transistor bipolaire (88) et le deuxième transistor bipolaire (90) correspondant à un premier type de conductivité, et le troisième transistor bipolaire (92) et le quatrième transistor bipolaire (94) à un deuxième type de conductivité.

9. Circuit (22) selon la revendication 8, **caractérisé en ce que** le premier (88) et le deuxième transistor bipolaire (90) sont identiques et **en ce que** le troisième transistor bipolaire (92) et le quatrième transistor bipolaire (94) présentent des surfaces base-émetteur différentes.

10. Circuit (22) selon l'une quelconque des revendications 4 à 9, **caractérisé par** un circuit de limitation d'intensité qui limite le courant à une valeur maximale prédéfinie par la boucle de régulation d'intensité.

11. Circuit (22) selon l'une au moins des revendications précédentes, **caractérisé en ce qu'**il est logé avec un transpondeur dans un carter (95) commun, dans lequel est également logé un condensateur (96) d'un circuit oscillant de réception du transpondeur.
